# EUROPEAN PATENT APPLICATION

(11) **EP 2 444 942 A1**
(43) Date of publication of application: **25.04.2012**
(21) Application number: 11185577.1
(22) Date of filing: 18.10.2011
(51) Int. Cl.: G06T 19/00

(54) **Apparatus and method for providing augmented reality (AR) information**

(30) Priority: 19.10.2010 KR 20100102061
(71) Applicant: Pantech Co., Ltd, Mapo-gu, Seoul 121-270 (KR)
(72) Inventor: Baek, Young-Cheon, 121-270 Seoul (KR)
(74) Representative: Herzog, Markus

(57) **Abstract**

Provided are a server, a terminal, and a method of providing Augmented Reality (AR) using a mobile tag in the terminal which is accessible to the server through a wired/wireless communication network. The method includes writing content in response to a tag creation request to create a tag; setting location information of the tag; setting, if the tag is a mobile tag, the location information of the mobile tag to a variable state and setting movement information of the mobile tag; and transmitting information about the mobile tag including the content, the location information, and the movement setting information of the mobile tag to the server, and requesting the server to register the mobile tag.

## Description

### CROSS-REFERENCE TO RELATED APPLICATION

This application claims priority from and the benefit under 35 U.S.C. §119(a) of Korean Patent Application No. 10-2010-0102061, filed on October 19, 2010, the disclosure of which is incorporated herein by reference for all purposes.

### BACKGROUND

Field

The following description relates to a system of providing Augmented Reality (AR) information.

Discussion of the Background

Augmented Reality (AR) is a computer graphic technique of synthesizing a virtual object or virtual information with a real environment such that the virtual object or virtual information looks like a real object or real information that exists in the real environment.

AR is characterized in synthesizing virtual objects based on a real world to provide additional information that cannot easily be obtained from the real world, unlike existing Virtual Reality (VR) that targets only virtual spaces and virtual objects. Due to the characteristic of AR, unlike the existing VR that has been applied to limited fields, such as games, the AR can be applied to various real environments and may be a next-generation display technique suitable for a ubiquitous environment.

For example, AR may be implemented as an overlapping method such that if a tourist points at a specific direction with a camera of a mobile phone in which a GPS sensor, etc. is installed, AR data about restaurants or stores located on a street along which he or she moves is overlapped with a real image of the street and the resultant image is displayed on the mobile phone.

However, in conventional AR techniques provide, if a mobile communication terminal executes an AR service, only fixed tag information, which is information related to objects included in a photographed image matching a direction and position in which the terminal's camera photographs, is provided. That is, the conventional AR techniques do not provide tag information related to objects not included in a photographed image. Accordingly, the conventional AR techniques require that a user trying to acquire information about a specific tag has to move to a place where the specific tag is provided.

### SUMMARY

Exemplary embodiments of the present invention provide an apparatus and method for providing Augmented Reality (AR) using a mobile tag that can be provided regardless of a user's location.

Exemplary embodiments of the present invention provide AR using a mobile tag so that it is possible to provide various kinds of information as well as fixed tags included in images photographed by a terminal's camera.

Exemplary embodiments of the present invention provide AR using a mobile tag that may be widely applied to various fields, such as advertisement, games, etc.

Additional features of the invention will be set forth in the description which follows, and in part will be apparent from the description, or may be learned by practice of the invention.

An exemplary embodiment provides a method for providing Augmented Reality (AR) using a mobile tag in a terminal, the method including: writing content in response to a tag creation request to create a tag; setting location information of the tag; setting, if the tag is a mobile tag, the location information of the mobile tag to a variable state; setting, if the tag is a mobile tag, movement information of the mobile tag; and transmitting information about the mobile tag including the content, the location information, and the movement setting information of the mobile tag, to a server.

An exemplary embodiment provides a method for providing Augmented Reality (AR) using a mobile tag in a server, the method including: monitoring location information of a terminal and location information of a mobile tag; calculating a movement direction and a movement speed of the mobile tag if the terminal collides with the mobile tag or the terminal approaches to within a distance to the mobile tag; and changing a location of the mobile tag based on the calculated movement direction and speed of the mobile tag.

An exemplary embodiment provides an apparatus to provide Augmented Reality (AR) using a mobile tag, the apparatus including: an image acquiring unit to acquire an image by photographing at least a portion of the real world; a display to output the image unit; a communication unit to receive signals from and/or transmit signals to a server through a wired/wireless communication network; a manipulation unit to receive tag creation information from a user; and a controller to receive content and location information in response to a tag creation request from the manipulation unit to create a tag, to set, if the tag is a mobile tag, the location information of the mobile tag to a variable state, to receive movement setting information of the mobile tag, and to transmit information about the mobile tag including the content, the location information, and the movement setting information of the mobile tag to the server through the communication unit to request the server to register the mobile tag.

An exemplary embodiment provides an apparatus to provide Augmented Reality (AR) using a mobile tag, the apparatus including: a communication unit to receive signals from or to transmit signals to a terminal through a wired/wireless communication network; a mobile tag information storage to store information about mobile tags and movement setting information of the mobile tags; and a controller to monitor location information of the terminal and location information of at least mobile tag, to calculate a movement direction and a movement speed of the mobile tag if the terminal collides with the mobile tag collides or the terminal approaches to within a distance to the mobile tag, and to change a location of the mobile tag based on the calculated movement direction and speed of the mobile tag.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 illustrates a communication system according to an exemplary embodiment of the present invention.

FIG. 2 is a diagram illustrating a terminal according to an exemplary embodiment of the present invention.

FIG. 3 is a diagram illustrating a server according to an exemplary embodiment of the present invention.

FIG. 4 is a flowchart illustrating a method according to an exemplary embodiment of the present invention.

FIG. 5 is a flowchart illustrating a method according to an exemplary embodiment of the present invention.

FIG. 6 is a flowchart illustrating a process according to an exemplary embodiment of the present invention.

FIG. 7 is a flowchart illustrating a process according to an exemplary embodiment of the present invention.

FIG. 8 is a view of a game according to an exemplary embodiment of the present invention.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art.

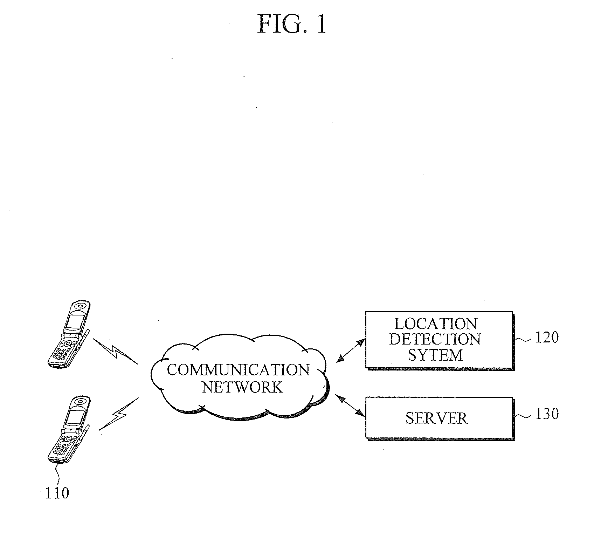

FIG. 1 illustrates a communication system according to an exemplary embodiment of the present invention. Referring to FIG. 1, the communication system includes at least one terminal 110 connected to a server 130 through a wired/wireless communication network. The at least one terminal 110 provides AR information, and the server 130 provides AR services. Here, the terminal 110 or server 130 may receive location information of the terminal 110 from a location detection system 120 through the wired/wireless communication network; however, aspects are not limited thereto such that the terminal 110 and/or the server 130 may determine the location of the terminal 110.

The terminal 110 may be a mobile communication terminal, such as a Personal Digital Assistants (PDA), a smart phone, a navigation terminal, or the like, or a personal computer, such as a desktop computer, a notebook, a tablet, or the like. Also, the terminal 110 may be one of arbitrary devices which can recognize objects included in images and display tag information corresponding to the recognized objects.

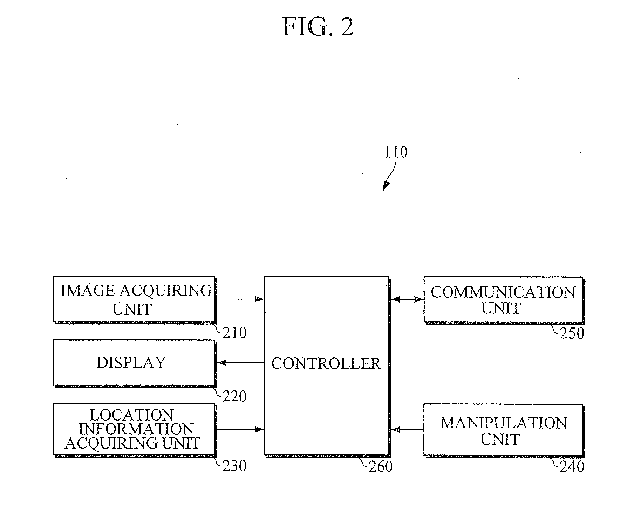

FIG. 2 is a diagram illustrating a terminal according to an exemplary embodiment of the present invention. The terminal may be the terminal 110 illustrated in FIG. 1. Referring to FIG. 2, the terminal 110 may include an image acquiring unit 210, a display 220, a location information acquiring unit 230, a communication unit 250, a manipulation unit 240, and a controller 260. The image acquiring unit 210 acquires an image by photographing at least a portion of the real world and outputs the image to the controller 260. The image acquiring unit 210 may be a camera or an image sensor. The image acquiring unit 210 may be a camera which can enlarge or reduce the sizes of images under the control of the controller 260 with or without a user input, or may be an automatically or manually rotatable camera.

The display 220 overlaps or overlays the image acquired by the image acquiring unit 210 with tag information related to objects included in an image received from the server 130 (see FIG. 1), and outputs the resultant image. If a tag included in the tag information is a mobile tag, the controller 260 may control the display 220 to display the mobile tag in the form of a moving object based on tag location movement information included in the tag information. Also, the display 220 may be glasses including displays that a user can wear in order to apply a mobile tag to a game, etc. The glasses provide convenience for manipulating a terminal while holding the terminal with a user's hand to use various functions of services, such as a game. The glasses may provide images and complex data, as well as text information.

The location information acquiring unit 230 may receive the location information of the terminal 110 from the location detection system 120 (see FIG. 1). The location information acquiring unit 230 may be a GPS receiver that receives location information signals transmitted from a GPS satellite, or a Location Based Service (LBS) system. The controller 260 transmits the location information acquired by the location information acquiring unit 230 to the server 130 through the communication unit 250.

The terminal 110 may provide its own location information to the server 130.

For example, the terminal 110 may transmit information regarding its own location from a real image as its own location information to the server 130 in order to provide information for searching for tag information corresponding to objects included in the real image.

As another example, the terminal 110 may transmit its real-time location information to the server 130 so that the real-time location information is used as information for determining whether there is collision with a mobile tag. Here, the terminal 110 may inform the server 130 in advance that the terminal 110 has approved provision of its own location information. The server 130 may provide the terminal 110 with a benefit in response to the approval of location information provision from the terminal 110. For example, the server 130 may provide the terminal 110 with a communication fee discount, various coupons, etc.

The manipulation unit 240 is an interface that can receive information from a user. The manipulation unit 240 may be a key input unit that generates key information if a key button is pressed, a touch sensor, a mouse or the like. According to an exemplary embodiment, the terminal 110 may receive at least one among tag creation information, movement setting information of mobile tags, and tag estimation information.

The communication unit 250 processes signals received through a wired/wireless communication network and outputs the processed signals to the controller 260. The communication unit 250 also processes internal output signals from the controller 260 and transmits the processed signals through the wired/wireless communication network.

The controller 260 controls the individual components described above and provides AR information using a mobile tag. The controller 260 may be a hardware processor or a software module which is executed by the hardware processor. The operation of the controller 260 will be described in more detail in accordance with a method of providing AR information using a mobile tag, which will be described later.

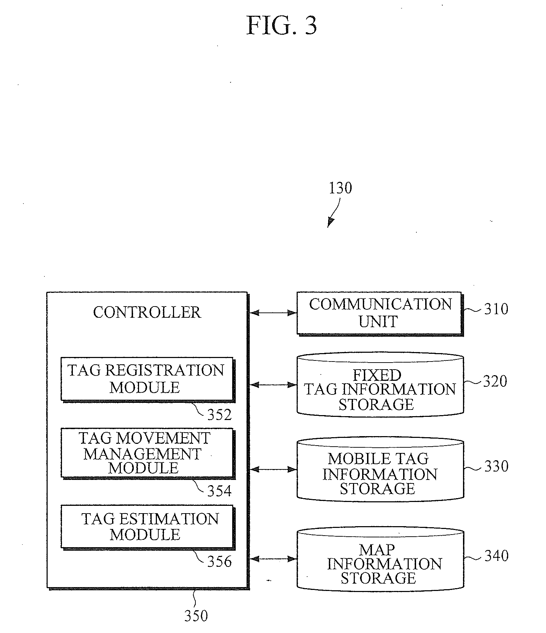

FIG. 3 is a diagram illustrating a server according to an exemplary embodiment of the present invention.

The server may be the server 130 illustrated in FIG. 1. Referring to FIG. 3, the server 130 includes a controller 350, a communication unit 310, and a storage.

The communication unit 310 processes signals received through a wired/wireless communication network and outputs the processed signals to the controller 350. The communication unit 310 also processes internal output signals from the controller 350 and transmits the processed signals through the wired/wireless communication network.

The storage may include a fixed tag information storage 320 and a mobile tag information storage 330.

The fixed tag information storage 320 stores fixed tag information, which is information about specific places or information about objects located at the specific places. The fixed tag information includes location information of the corresponding tags, information about the tags, tag sizes, etc.

The mobile tag information storage 330 stores information about mobile tags that can be provided regardless of location, and may store movement setting information of the mobile tags. The movement setting information of the mobile tags may include information about conditions under which a tag movement event occurs, information about a tag movement method, information about a region through which tags are movable, and a number of tags.

The information about conditions under which the tag movement event occurs, which is information about conditions under which mobile tags can move, may include the case where mobile tags approach or collide with a terminal. A region within which the tag movement event occurs may be set by a person who has registered information about mobile tags.

The information about the tag movement method is setting information about how mobile tags move. For example, if a mobile tag approaches or collides with a terminal, a direction in which the mobile tag moves may be the same as the movement direction of the terminal, and a speed at which the mobile tag moves may be the same as the movement speed of the terminal.

Also, it is possible that a mobile tag moves along with movement of a terminal. For example, a mobile tag moves following a terminal. As another example, if a mobile tag is an advertisement, the mobile tag may move to a target place for the advertisement in order to guide a terminal to the target place. In this case, the information about the tag movement method may include destination information of the mobile tag.

The information about the region through which tags are movable may be, if a mobile tag is a tag for an advertisement for a specific toiletry for women in their twenties, set to the center region of a city where women in their twenties often come and go in order to enhance the use efficiency of the tag.

In addition, the information about the region may be set more conveniently and quickly by providing information, such as a tag size optimized for users' convenience, a range of the set region, radiuses of approach and collision, etc. Also, the movement setting information of mobile tags may be provided. For example, the movement setting information of mobile tags may be set to adjust a movement speed of a mobile tag in a region in which a tag movement event often occurs and to recognize a tag movement event according to the occurrence number of tag movement events. By allowing setting of the movement setting information of mobile tags to increase the efficiency of the movement setting information of mobile tags, excessive tag movement in a densely populated region may be prevented to induce more natural movement, and longer tag movement in a sparsely populated region may be allowed.

Meanwhile, two or more of the same mobile tags may be created, and information regarding the number of mobile tags to be created may be set by a person who creates the mobile tags. Also, the initial location of each mobile tag may be set by the person who creates the mobile tags.

Also, if two of the same mobile tags collide with each other, the mobile tags may be merged into a mobile tag having a larger size. Or, a mobile tag may be segmented into two or more tags. The mobile tag may be segmented into two or more tags periodically.

The storage may further include a map information storage 340, and a map stored in the map information storage 340 may be based on the same coordinate system as the coordinate system used in a LBS. The server 130 manages the locations and movement of mobile tags based on the coordinate system of the map. Specifically, the server 130 defines areas in which no mobile tag can be located as shaded areas, and manages the shaded areas to eliminate factors restricting movement of mobile tags. Here, the shaded areas may be the inside of buildings whose locations may not be measured, rivers, lakes, seas, and the like, in which little or no tag movement can be expected since few or no terminals may be located in such areas. However, areas, such as the insides of buildings in which location information of a terminal can be acquired by the location detection system 120 (see FIG. 1), large buildings, department stores, hospitals, and the like, may be excluded from the shaded areas.

The controller 350, which controls the components described above to provide AR information using mobile tags, may be a hardware processor or a software module that is executed in the hardware processor.

According to an exemplary embodiment, the controller 350 includes a tag registration module 352, a tag movement management module 354, and a tag estimation module 356.

The tag registration module 352 receives fixed tag information or mobile tag information that is transmitted from at least one terminal and stores the received tag information in the fixed tag information storage 320 and the mobile tag information storage 330, respectively.

The tag movement management module 354 compares the location information of at least one terminal, which may be acquired in real time, to the location information of the mobile tag registered in the tag information storage 330 to control movement of the mobile tag. The tag movement management module 354 may provide the terminal with information regarding whether the terminal collides with or occupies a same location as the mobile tag. In addition, if a mobile tag enters a shaded area, the tag movement management module 354 may determine that a collision event occurs.

The tag estimation module 356 functions to filter tags, collects information regarding the number of tag usage occurrences or postscripts information about use of tags from at least one terminal that has received AR information through tags, and manages creation and removal of tags based on the number of tag usage occurrences or postscripts information about use of tags. For example, if the number of usage occurrences of a specific mobile tag exceeds a specific value or if the number of positive postscripts about use of a specific mobile tag exceeds a specific value, the tag estimation module 356 may increase the corresponding mobile tag by a specific number. On the contrary, if the number of usage occurrences of a specific mobile tag is less than a specific value or if the number of positive postscripts about use of a specific mobile tag is less than a specific value, the tag estimation module 356 may remove the corresponding mobile tag. This is aimed at preventing overflow of unuseful mobile tags and increasing useful mobile tags to allow users to use the useful mobile tags more. The filtering function may be performed by each terminal as well as by the server 130.

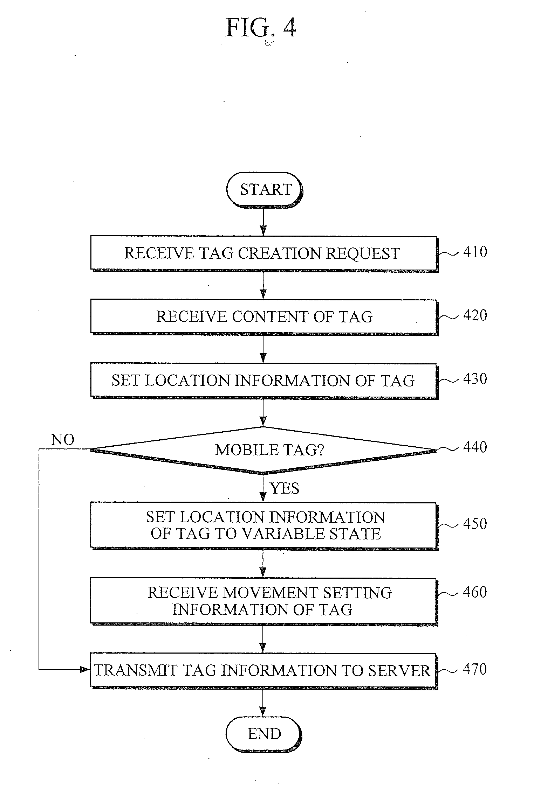

Hereinafter, methods of providing AR information using mobile tags according to exemplary embodiments of the present invention will be described with reference to FIGS. 4, 5, and 6.

FIG. 4 is a flowchart illustrating a method according to an exemplary embodiment of the present invention. The example of FIG. 4 relates to the case in which a terminal creates a mobile tag, but may be also applied to the case in which a server creates a mobile tag.

The method illustrated in FIG. 4 may be performed by the terminal 110 illustrated in FIG. 2. Referring to FIGS. 1 through 4, the controller 260 of the terminal 110 receives a tag creation request in operation 410, for example, from a user through the manipulation unit 240, and receives content of the corresponding tag by receiving interface information in operation 420, for example, from the user. Then, the controller 260 sets a location of the tag in operation 430. The tag location may be set to a location of the terminal 110 which creates the tag, or to a location designated by the user through the manipulation unit 240. Also, a plurality of tags may be created and the respective tags may be set to different locations.

Then, the controller 260 determines whether the created tag is a mobile tag in operation 440. That is, the controller 260 may receive information regarding whether the tag is a mobile tag to determine whether the tag is a mobile tag, for example, from the user through the manipulation unit 240.

If it is determined that the created tag is a mobile tag, the controller 260 may set the location information of the tag to a variable state in operation 450. Then, the controller 260 receives movement setting information of the mobile tag in operation 460, of which the movement setting information of the mobile tag may include information about conditions under which a tag movement event occurs, information about a tag movement method, information about a region through which the tag is movable, etc.

Meanwhile, in operation 440, if it is determined that the created tag is not a mobile tag, the process proceeds to operation 470.

In operation 470, the controller 260 transmits information about the tag to the server 130 to request the server 130 to register the tag. If the tag is a mobile tag, tag information including the content and location of the tag and the movement setting information of the tag is transmitted to the server 130. If the tag is a fixed tag, tag information including the content and location of the tag is transmitted to the server 130.

In operation 410, the tag registration module 352 of the server 130 stores tag information received from the terminal 110, i.e., the server 130 stores the tag information in the fixed tag information storage 320 if the tag is a fixed tag and stores the tag information in the mobile tag information storage 330 if the tag is a mobile tag.

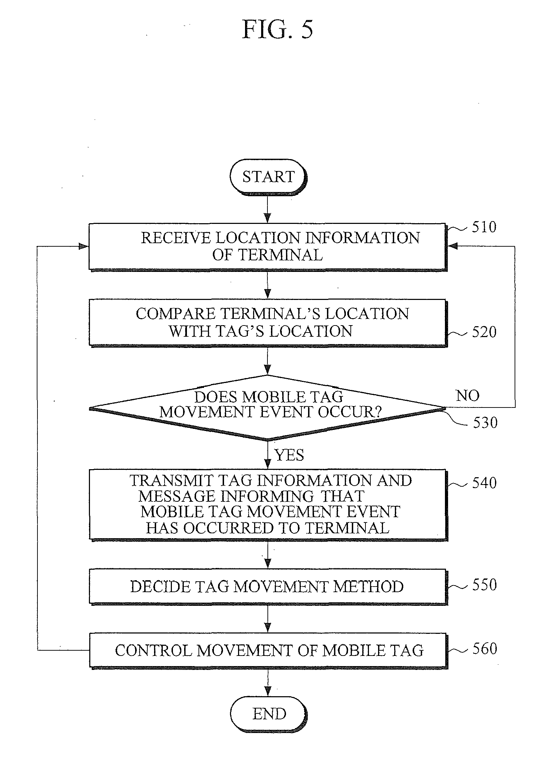

FIG. 5 is a flowchart illustrating a method of controlling movement according to an exemplary embodiment of the present invention.

Referring to FIGS. 1, 2, 3, and 5, the controller 350 of the server 130 acquires location information of at least one terminal (for example, terminal 110 of FIG. 2) through the communication unit 310 in operation 510. The controller 350 may receive the location information of the terminal 110 from the terminal 110 which has received its own location information through the location information acquiring unit 230, or acquire the location information of the terminal 110 from the location detection system 120. The controller 350 may use the location information of the terminal 110 under the approval from a user of the terminal 110.

The controller 350 monitors the location of the terminal 110 and the location of at least one mobile tag stored in the mobile tag storage 330 in real time in operation 520.

In operation 530, the controller 350 determines whether a movement event for the mobile tag occurs based on the result of the monitoring. That is, the controller 350 determines whether the terminal 110 collides with the mobile tag or whether the terminal 110 is within a predetermined range from the mobile tag. When it is determined in operation 530 that a movement event for the mobile tag occurs, in operation 540, the controller 350 transmits the tag information and a message informing that a movement event for the mobile tag has occurred to the terminal 110 so that the terminal 110 colliding with or approaching the mobile tag can use the mobile tag.

In operation 550, the controller 350 determines a movement method of the mobile tag with reference to information about a tag movement method of the corresponding mobile tag stored in the mobile tag information storage 330 in operation 550.

The tag movement method may include a method in which the mobile tag moves in an inverse, opposite, or different direction with respect to the movement direction of the terminal 110 upon collision of the terminal 110 with the mobile tag, and a method in which the mobile tag moves in a same direction as the movement direction of the terminal 110 upon the collision of the terminal 110 with the mobile tag. The method in which the mobile tag moves in the same direction as the movement direction of the terminal 110 may be set in advance by a person who has created the mobile tag or by a terminal which has received the message informing that the movement event for the mobile tag has occurred.

In other words, a terminal which has received information about the mobile tag and the message informing that the movement event for the mobile tag has occurred may request the controller 350 to make the movement direction of the mobile tag the same as or opposite to the movement direction of the terminal 110.

There are various methods to make a mobile tag move according to the movement of a terminal 110. For example, the mobile tag may move to follow a terminal 110, i.e., the mobile tag may be included in the terminal 110. As another example, a mobile tag may guide a terminal 110 to move to a target place, i.e., the mobile tag may move away from the terminal 110 and lead the terminal user to the target place. If the target place is reached according to the guidance of the mobile tag, the terminal 110 may receive a corresponding benefit or reward.

In operation 560, the controller 350 controls the mobile tag to move according to the determined movement method.

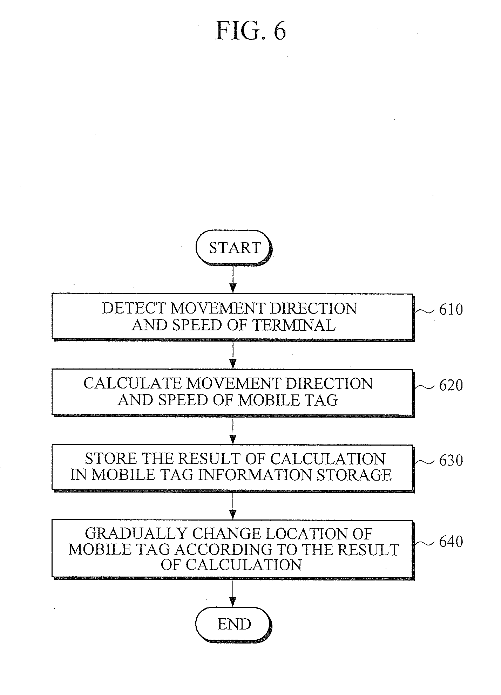

FIG. 6 is a flowchart illustrating a process according to an exemplary embodiment of the present invention. Among the tag movement methods, the method in which the mobile tag moves in an opposite direction with respect to the movement direction of the terminal 110 upon collision will be described with reference to FIGS. 1, 2, 3, and 6, below.

Referring to FIGS. 1, 2, 3, and 6, in operation 610, the controller 350 detects a movement direction and speed of a terminal 110 which has collided with a mobile tag. In operation 620, the controller 350 of the server 130 calculates a movement direction and speed of the mobile tag based on the movement direction and speed of the terminal 110. In operation 630, the controller 350 stores the calculated values in the mobile tag information storage 330. In operation 640, the controller 350 gradually changes the location of the mobile tag at a constant speed according to the calculated values. In other words, a mobile tag moves not in a manner to directly change its location to a specific location according to the calculated values, but in a manner to gradually change its location at a constant speed toward a specific location according to the calculated values. Accordingly, when the mobile tag is displayed on the display 220, the terminal shows a screen on which the mobile tag gradually moves.

Meanwhile, the server 130 may cause the controller 350 to adjust the size of the mobile tag on a preview screen of the terminal 110 in consideration of the location of a user who receives information about the mobile tag and the location of the mobile tag so that the user can intuitively recognize a distance between his or her location and the mobile tag from the size of the mobile tag. The server 130 may provide the user with a value corresponding to the distance between the terminal 110 and the mobile tag. In this way, by providing information regarding the distance between a mobile tag and a user in the form of a tag size or as a value, the user's intended collision with and approach to the mobile tag is allowed.

Meanwhile, there is the case in which a movement event for a mobile tag occurs not by collision of the mobile tag with a terminal but by collision of the mobile tag with another mobile tag. When two mobile tags collide with each other, the controller 3 50 merges the two mobile tags into a new mobile tag including all content of the individual mobile tags and having a larger size. That is, by providing, if two mobile tags collide with each other, a mobile tag having a larger size and offering double benefits, it is possible to improve a user's recognition rate and promote use of mobile tags.

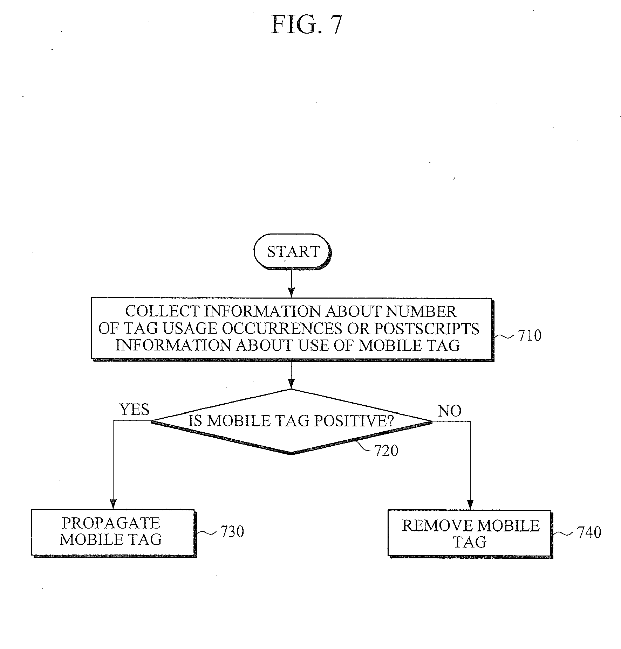

FIG. 7 is a flowchart illustrating a process according to an exemplary embodiment of the present invention. Hereinafter, a process of estimating a mobile tag in a server will be described with reference to FIG. 7.

Referring to FIG. 7, in operation 710, the controller 350 of the server 130 collects information about a number of tag usage occurrences or postscripts information about use of a mobile tag from at least one terminal 110 that has used the mobile tag, and stores the collected information in the mobile tag information storage 330.

In operation 720, the controller 350 determines whether the mobile tag is positive. That is, the controller 350 counts the number of usage occurrences of the mobile tag and determines whether the number of usage occurrences of the mobile tag exceeds a value or whether the number of positive postscripts for use of the mobile tag exceeds a value, thereby determining whether the mobile tag is positive.

In operation 730, if it is determined that the mobile tag is positive, the controller 350 propagates the mobile tag in a manner to increase the size of the mobile tag or to create one or more additional mobile tags.

In operation 740, if it is determined in operation 720 that the mobile tag is not positive, the controller 350 removes the mobile tag.

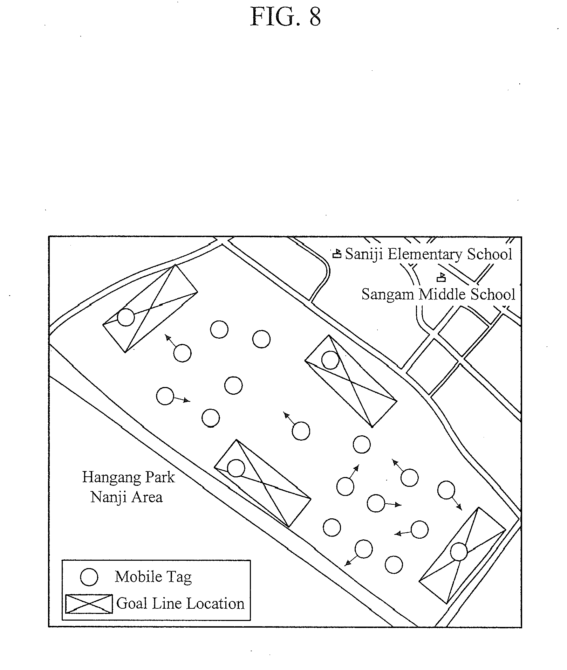

FIG. 8 is a view of a game according to an exemplary embodiment of the present invention.

A server 130 receives and manages information regarding a service subscriber's or a user's location at regular time intervals. A creator which has created a game or an event sets a region, the characteristics of a mobile tag, a region within which a mobile tag is determined to approach or collide with a terminal 110, etc., and a goal line location. In order for a user to conveniently set the above setting items, the server 130 or service may provide the user with an example of optimized environmental settings and allows the user to perform direct setting.

Under these conditions, a user who has subscribed or accessed the service may play the game or event in a manner to attain a goal, for example, acquiring the mobile tag or moving the mobile tag to a goal line. The user can see the characteristics of the mobile tag, the distance between her and the mobile tag, etc., through the display of the terminal, and the goal line location is provided in the form of an image, alarm, map, or the like. Accordingly, the user's intended approach to the mobile tag is allowed and the user can recognize goal attainment. The server 130 may provide the creator with information about a user who has most moved the mobile tag so as to offer the user a benefit or reward. In addition, the server 130 may make the progress of the game more interesting by removing a mobile tag used to acquire the event or attain the goal to limit the number of persons to which event acquirement or goal attainment is allowed.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
Provided are a server, a terminal, and a method of providing Augmented Reality (AR) using a mobile tag in the terminal which is accessible to the server through a wired/wireless communication network. The method includes writing content in response to a tag creation request to create a tag; setting location information of the tag; setting, if the tag is a mobile tag, the location information of the mobile tag to a variable state and setting movement information of the mobile tag; and transmitting information about the mobile tag including the content, the location information, and the movement setting information of the mobile tag to the server, and requesting the server to register the mobile tag.

## Claims

1. A method for providing Augmented Reality (AR) using a mobile tag in a terminal, the method comprising:
writing content in response to a tag creation request to create a tag;
setting location information of the tag;
setting, if the tag is a mobile tag, the location information of the mobile tag to a variable state;
setting, if the tag is a mobile tag, movement information of the mobile tag; and
transmitting information about the mobile tag including the content, the location information, and the movement setting information of the mobile tag, to a server.

2. The method of claim 1, further comprising:
requesting the server to register the mobile tag.

3. The method of claim 1 or 2, wherein the location information of the tag is set to a location of a terminal that creates the tag or to a location designated by a user.

4. The method of any of claims 1 to 3, wherein the movement setting information of the mobile tag comprises at least one among information about conditions under which a movement event of the mobile tag occurs, information about a movement method of the mobile tag, and information about a region through which the mobile tag is movable.

5. The method of any of claims 1 to 4, further comprising:
receiving, from the server, a message informing that the terminal has collided with or approached the mobile tag;
receiving information about the mobile tag with which the terminal has collided or approached; and
displaying the information about the mobile tag in the terminal.

6. The method of claim 5, further comprising requesting the server to make the mobile tag move in relation to a movement of the terminal.

7. The method of claim 6, wherein the movement of the mobile tag is in a same direction as the movement of the terminal.

8. The method of claim 6, wherein the movement of the mobile tag is in an opposite direction with respect to the movement of the terminal.

9. The method of any of claims 5 to 8, further comprising transmitting postscripts information about use of the mobile tag to the server.

10. An apparatus to provide Augmented Reality (AR) using a mobile tag, the apparatus comprising:
an image acquiring unit to acquire an image by photographing at least a portion of the real world;
a display to output the image unit;
a communication unit to receive signals from and/or transmit signals to a server through a wired/wireless communication network;
a manipulation unit to receive tag creation information from a user; and
a controller to receive content and location information in response to a tag creation request from the manipulation unit to create a tag, to set, if the tag is a mobile tag, the location information of the mobile tag to a variable state, to receive movement setting information of the mobile tag, and to transmit information about the mobile tag including the content, the location information, and the movement setting information of the mobile tag to the server through the communication unit to request the server to register the mobile tag.

11. The apparatus of claim 10, wherein the location information of the tag is set to a location of a user terminal that creates the tag or to a location designated by a user.

12. The apparatus of claim 10 or 11, wherein the movement setting information of the mobile tag includes at least one among information about conditions under which a movement event of the mobile tag occurs, information about a movement method of the mobile tag, and information about a region through which the mobile tag is movable.

13. The apparatus of any of claims 10 to 12, further comprising a location information acquiring unit to acquire and output location information of the apparatus, wherein the controller transmits the location information of the apparatus to the server through the communication unit in real time.
